# EUROPEAN PATENT SPECIFICATION

(11) **EP 2 975 733 B1**
(45) Date of publication and mention of the grant of the patent: **01.05.2019**
(21) Application number: 14176847.3
(22) Date of filing: 14.07.2014
(51) Int. Cl.: H02K 3/14

(54) **A Roebel bar for use in an electric machine**
Roebelstab zur Verwendung in einer elektrischen Maschine
Barre Roebel destinée à être utilisée dans une machine électrique

(43) Date of publication of application: 20.01.2016
(73) Proprietor: General Electric Technology GmbH, 5400 Baden (CH)
(72) Inventor: Haldemann, Johann, 5242 Birr (CH)
(74) Representative: General Electric Technology GmbH

(56) References cited:
- DE-A1- 19 754 943
- FR-A1- 2 540 686
- US-A- 1 144 252
- US-A- 4 959 575
- US-A1- 2002 050 395

## Description

### TECHNICAL FIELD

The present disclosure relates to a Roebel bar for insertion in a stator of an electric machine and to a two layer winding in slots of an electric machine.

### BACKGROUND

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

The winding conductors of dynamoelectric machines are placed in slots in a laminated magnetic core. When currents flow in the conductors, magnetic fluxes occur across the slots which cause induced voltages and eddy currents in the conductor. Similar fluxes link the end turn portions of the conductor outside the slot, with some additional leakage flux from the rotor and stator, and cause similar induced voltages in the end portions. For this reason, the conductors of large machines are always of stranded construction, being built up of a substantial number of relatively thin strands to minimize the eddy current loss. The fluxes, however, are not uniform but vary radially in density so that the induced strand voltages vary from strand to strand and circulating currents due to these unbalanced voltages flow between the strands causing excessive losses and heating. For this reason, it is necessary to transpose the strands in order to cancel out as far as possible the unbalanced strand voltages to minimize the circulating currents and resultant heating. Conducting bars in this technical field with transposed strands are commonly referred to as Roebel bars. These single Roebel bars contain a stack of two adjacent strands.

US3647932A describes a transposed stranded conductor for dynamoelectric machines having four stacks of strands transposed in the slot portion of the conductor in such a manner that each stack moves to different transverse positions in successive longitudinal sections of the bar such that the stacks are reversed in transverse position at opposite ends of the bar. Preferably, the strands are also transposed in a manner to cause inversion of the relative strand positions at opposite ends of the slot so that the conductor is fully transposed with inversion of strand position both transversely of the slot and depthwise of the slot.

In a synchronous machine like a turbogenerator the slot window or slot opening in the stator can be large and there might be in addition a rather small distance to the strands of the Roebel bar. If these strands are large they might be submitted to high eddy current losses because of the radial field coming from the air gap. By reducing the strand width such losses will drop drastically. For single Roebel bars the solution to reduce the strand width is to switch to a double Roebel bar arrangement having four strands in each row of a stack of strands.

DE 19754943 A1 describes a winding for an electric machine with transposed conductor bars with two pairs of strands, whereas either four pairs of strands are transposed in parallel, four pairs are cross transposed, or two pairs are transposed in parallel and two pairs of strands are cross transposed.

If double Roebel bar technology is already applied and the strands still are large it might be necessary to even more reduce the strand width. Reducing the strand width of a double Roebel bar with four stacks of strands to around 2/3 of the original width by switching to a triple Roebel bar by designing six stacks instead of four stacks could lead to a reduction of the eddy current losses in the strands due to the radial field by more than a factor of two. Hereby, a problem arises how to assure that the circulating currents remain suppressed when applying six stack Roebel bars.

### SUMMARY

It is an object of the invention to provide a solution for a Roebel bar arrangement with six or more stacks of strands in which the circulating current losses are low.

This object is solved with a Roebel bar and with a two layer winding of Roebel bars in slots of an electric machine according to the independent claim.

Further developments are described in the dependent claims.

### BRIEF DESCRIPTION OF THE DRAWINGS

Further characteristics and advantages will be more apparent from the description of a preferred but non-exclusive embodiment of the Roebel bar and the two layer winding, illustrated by way of non-limiting example in the accompanying drawings, in which:
- Fig. 1: shows a schematic top view of the top six strands of a Roebel bar and a first transposition scheme of the strands as an example of the invention;
- Fig. 2: shows a schematic top view of the top six strands of a Roebel bar and a second transposition scheme of the strands, with hollow and massive strands as an example of the invention;
- Fig. 3: shows a schematic top view of the top six strands of a Roebel bar and a third transposition scheme of the strands as an example of the invention;
- Fig. 4: shows a schematic top view of the top six strands of a Roebel bar and a fourth transposition scheme of the strands as an example of the invention;
- Fig. 5: shows a schematic top view of the top six strands of a Roebel bar and a fifth transposition scheme of the strands as an example of the invention.
- Fig. 6: shows a schematic view of a slot of a stator of an electric machine with two Roebel bars according to examples of the invention housed within the slot.

### DETAILED DESCRIPTION OF EXEMPLARY EMBODIMENTS

With reference to the figures, these show five schematic top views of Roebel bars, wherein like reference numerals designate identical or corresponding parts throughout the several views.

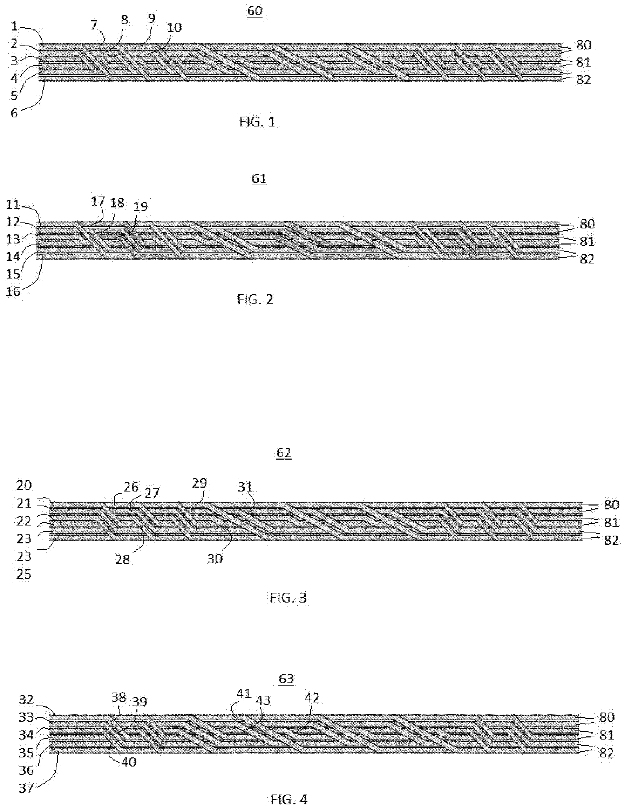

Fig. 1 shows a schematic top view of the top six strands (1-6) of a Roebel bar 60 with a first transposition scheme of the strands (1-6) as an example of the invention. The strands (1-6) are usually from copper and insulated against each other by impregnation. The Roebel bar 60 has a length of several metres, in the view shown from the left to right side. The Roebel bar 60 is arranged for being placed into a slot 75 of a stator of an electric machine. Mostly, two Roebel bars 60 are arranged in the slot 75 on each other, which is denominated as a two-layer winding 80 in the state of the art. The six strands (1-6) are the topmost strands (1-6) of six columns, whereby each column consists of three strands in Figs 1-5. With other words in the examples of the Figs 1-5 three strands are stacked on each other and six of these stacks or columns of three strands are placed side by side next to each other. The total number of strands in each Roebel bar 60-64 is then eighteen. Fig. 1 shows a sequence of transpositions with an upper strand 1 of a first pair of strands 80 is transposed to the lower strand 6 of the third pair of strands 82, the upper strand 3 of the second pair of strands 81 is transposed to the lower strand 4 of the second pair of strands 81, and the lower strand 2 of the first pair of strands 80 is transposed to the upper strand 5 of the third pair of strands 82. This configuration can be denominated as a kind of cross transposition of the strands 1-10 of the Roebel bar 60, especially a so-called false cross transposition. In Fig. 1 and in the Figs. 2, 3, 5 are shown three times transpositions of the strands 1-56 by an angle of 180° leading to a combined transposition of an angle of 540° of the respective Roebel bar 60, 61, 62, 64. It is clear that to obtain a symmetric Roebel bar 60-64 the positions becoming free, i.e. from which strands 1-64 are transposed, have to be replaced by another strand 1-56. Correspondingly, the positions to be captured by a respective transposed strand 1-56 have to be made free by the strand 1-56 to be replaced.

Fig. 2 shows a schematic top view of the top six strands (11-16) of a Roebel bar 61 and a second transposition scheme of the strands (11-16), with hollow strands (17-19) and massive strands (11-16) as a further example of the invention. The hollow strands (17-19) are designed from insulated copper or stainless steel with hollow internal spaces to the end of cooling the Roebel bar (60-64) in high power applications with high demands. Shown here is a certain configuration of the transposition scheme leading to low circulating current losses at the strands (1-56). In detail the transpositions of the strands (1-56) of the example of the invention are described below. Six straight strands (1-6) are designed and abut each other which are distributed in three pairs of strands (80, 81, 82). The three pairs of strands (80, 81, 82) each contain two adjacent strands (1-56), hereby the strands 11 and 12, the strands 13 and 14, and the strands 15 and 16, respectively. Basically, the transposition of a strand 1-56 to the position of another strand 1-56 means the second strand 1-56 is to be placed a level deeper in the stack of strands 1-56. Similarly, the position of the strand 1-56 to be transposed is to be taken over by a strand 1-56 below the original position of this strand 1-56. Thus, a strand 1-56 at the lowest level has to be transposed when at the highest level a strand 1-56 occupies a position. The structure of bar transpositions and Roebelisation in principle is known in the state of the art. In Fig. 2 the upper strand 11 of the first pair of strands 80 is transposed to the lower strand 16 of the third pair of strands 82, the upper strand 13 of the second pair of strands 81 is transposed to the lower strand 14 of the second pair of strands 81, and the lower strand 12 of the first pair of strands 80 is transposed to the upper strand 15 of the third pair of strands 82 and then one time the upper strand 17 of the first pair of strands 80 is transposed to the lower strand 14 of the second pair of strands 81, the lower strand 18 of the first pair of strands 80 is transposed to the upper strand 15 of the third pair of strands 82, and the upper strand 19 of the second pair of strands 81 is transposed to the lower strand 16 of the third pair of strands 82. This example discloses sequences of two times a kind of false cross transposition followed by one time a kind of parallel transposition.

Fig. 3 shows a further example of the invention of a transposition scheme of the strands 1-56 of a Roebel bar, also denominated as Roebelisation. As is shown in a schematic way from the top, the upper strand 20 of the first pair of strands 80 is transposed to the lower strand 23 of the second pair of strands 81, the lower strand 21 of the first pair of strands 80 is transposed to the upper strand 24 of the third pair of strands 82, and the upper strand 22 of the second pair of strands 81 is transposed to the lower strand 25 of the third pair of strands 82. This transposition scheme above is applied three times in a row. Then, for three times consecutively an upper strand 29 of the first pair of strands 80 is transposed to the lower strand 25 of the third pair of strands 82, the upper strand 30 of the second pair of strands 81 is transposed to the lower strand 23 of the second pair of strands 81, and the lower strand 31 of the first pair of strands 80 is transposed to the upper strand 24 of the third pair of strands 82. This transposition of the two different transposition schemes each three times consecutively as described above is repeated along the length of the Roebel bar 62. This example discloses sequences of three times a kind of parallel transposition followed by three times a kind of false cross transposition.

Fig. 4 shows another example of the invention with a different transposition scheme. Here, for three times in a row the upper strand 38 (or 32) of the first pair of strands 80 is transposed to the lower strand 35 of the second pair of strands 81, the lower strand 39 (or 33) of the first pair of strands 80 is transposed to the upper strand 36 of the third pair of strands 82, and the upper strand 40 (or 34) of the second pair of strands 81 is transposed to the lower strand 37 of the third pair of strands 82. After these transpositions of the strands 35-43, a transposition is applied to the Roebel bar 63 for three times consecutively as follows. The lower strand 43 of the first pair of strands 80 is transposed to the upper strand 36 of the third pair of strands 82, the upper strand 41 of the first pair of strands 80 is transposed to the lower strand 37 of the third pair of strands 82, and the upper strand 42 of the second pair of strands 81 is transposed to the lower strand 35 of the second pair of strands 81. This example discloses sequences of two or three times a kind of parallel transposition followed by three times a kind of false cross transposition. In this example of Fig. 4 different to the examples according to the Figs 1, 2, 3, 5 are realized two times a transposition of an angle of 180° and one time a transposition of an angle of 120° leading to a combined transposition of an angle of 480° of the Roebel bar 63.

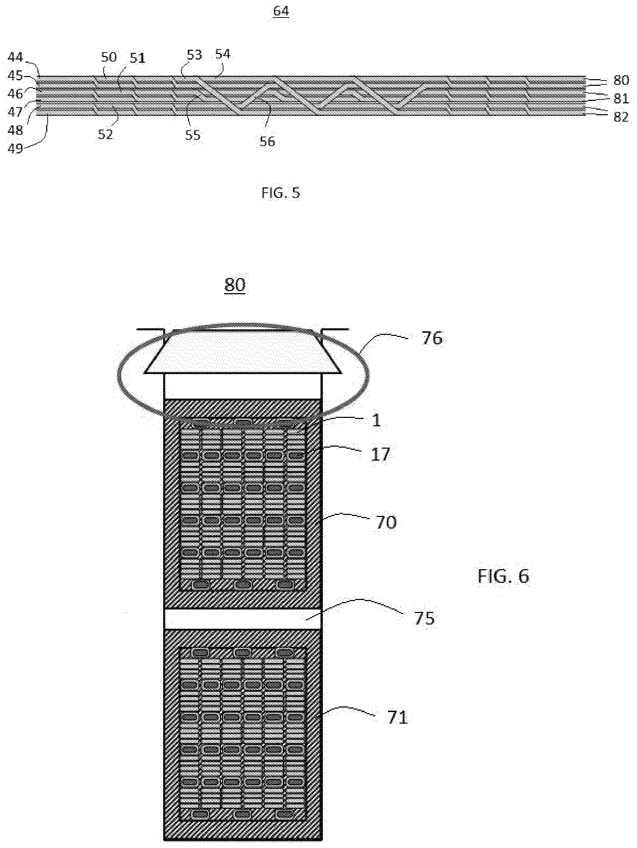

Fig. 5 shows a further example of the invention. Hereby, a transposition is executed for three times consecutively as follows. The upper strand 44 of the first pair of strands 80 is transposed to the lower strand 45 of the first pair of strands 80, the upper strand 46 of the second pair of strands 81 is transposed to the lower strand 47 of the second pair of strands 81, and the upper strand 48 of the third pair of strands 82 is transposed to the lower strand 49 of the third pair of strands 82. Thereafter, for three times consecutively the following transposition of strands 44-56 is executed. The upper strand 53 of the first pair of strands 80 is transposed to the lower strand 49 of the third pair of strands 82, the upper strand 55 of the second pair of strands 81 is transposed to the lower strand 47 of the second pair of strands 81, and the upper strand 56 of the third pair of strands 82 is transposed to the lower strand 45 of the first pair of strands 80. This example discloses sequences of three times a kind of individual transposition or single transposition followed by three times a kind of cross transposition or true cross transposition.

Fig. 6 shows a schematic cross-section side view of a slot 75 of a stator of an electric machine with two Roebel bars 70, 71 according to examples of the invention housed within the slot 75. The slots 75 are commonly designed in the stator core for the Roebel bars 70, 71 to be included as is well known in the state of the art. At the top in this view a slot opening 76 is shown, marked with a circle here. The direction to the bottom is the direction to the stator core and the centre of the stator (not shown). Both Roebel bars 70, 71 have six stacks of strands 1-56 placed next to each other. In the contrary to the examples of Figs 1-5 the stacks or columns of the two Roebel bars 70, 71 consist of a multitude of strands in Fig. 6, here twenty-four strands. The invention is as well applicable to Roebel bars 70, 71 having even higher number of stacks, for example eight, ten or more. Here, both massive strands 1 and hollow strands 17 are shown by way of example, whereas only one strand 1, 17 of each is referenced for sake of convenience. The configuration shown in Fig. 6 with the slot 75 and the two Roebel bars 70, 71 is denominated as a two-layer winding 80. There are two layers of Roebel bars 70, 71 realized within the slot 75.

It is as well possible to apply the invention to Roebel bars 60-64, where the set-up of the strands 1-56 is modified i.e. the sequence of strands 1-56 having ramping up and strands 1-56 ramping down. In most of the shown examples under Fig. 1-5 the strands 1-56 at the left are ramping up and the strands 1-56 at the right are ramping down. The invention is as well applicable when the end winding parts of the Roebel bars 60-64 are as well transposed. In the examples however only parts of the notch parts to be placed into slots 75 are described. The examples under Fig. 1-5 all disclose a transposition angle of the strands 1-56 of 540° along the length of the Roebel bar 60-64 in the slot 75, i.e. the transposed strands 1-56 perform a complete turn around the Roebel bar 60-64 in the slot 75 and additionally a half turn. At one end of the Roebel bar 60-64 a respective strand 1-56 is transposed to the same position as at the start and further at the other end the respective strand 1-56 has performed a further half turn. It is to be noted that a common Roebel bar usually has a transposition angle of 360°, i.e. the strands perform a complete turn around in the slot of the Roebel bar to be positioned at the one end of the slot in the same position as at the other end.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended herto.

## Claims

1. A Roebel bar (60-64, 70, 71) for use in an electric machine comprising a stator core with slots (75) for inserting the Roebel bar (60-64, 70, 71), the Roebel bar (60-64, 70, 71) has three pairs (80, 81, 82) of strands (1-56) insulated from each other, whereas the strands (1-56) are transposed with each other such that at least one of the strands (1-56) of the pairs (80, 81, 82) of strands (1-56) are transposed with each other and such that at least one of the pairs (80, 81, 82) of strands (1-56) is transposed with another pair (80, 81, 82) of strands (1-56), whereas in a slot part of the Roebel bar (60-64, 70, 71) the three pairs (80, 81, 82) of strands (1-56) have a combined transposition of 540° and in a yoke part of the Roebel bar (60-64, 70, 71) outside of the slots (75) the strands (1-56) have no transposition, **characterized in that**
a) consecutively an upper strand (1) of the first pair of strands (80) is transposed to the lower strand (6) of the third pair of strands (82), the upper strand (3) of the second pair of strands (81) is transposed to the lower strand (4) of the second pair of strands (81), and the lower strand (2) of the first pair of strands (80) is transposed to the upper strand (5) of the third pair of strands (82), or
b) consecutively the upper strand (44) of the first pair of strands (80) is transposed to the lower strand (45) of the first pair of strands (80), the upper strand (46) of the second pair of strands (81) is transposed to the lower strand (47) of the second pair of strands (81), and the upper strand (48) of the third pair of strands (82) is transposed to the lower strand (49) of the third pair of strands (82) and the upper strand (53) of the first pair of strands (80) is transposed to the lower strand (49) of the third pair of strands (82), the upper strand (55) of the second pair of strands (81) is transposed to the lower strand (47) of the second pair of strands (81), and the upper strand (56) of the third pair of strands (82) is transposed to the lower strand (45) of the first pair of strands (80), or
c) consecutively
- an upper strand (11) of the first pair of strands (80) is transposed to the lower strand (16) of the third pair of strands (82), the upper strand (13) of the second pair of strands (81) is transposed to the lower strand (14) of the second pair of strands (81), and the lower strand (12) of the first pair of strands (80) is transposed to the upper strand (15) of the third pair of strands (82) and then
- the upper strand (17) of the first pair of strands (80) is transposed to the lower strand (14) of the second pair of strands (81), the lower strand (18) of the first pair of strands (80) is transposed to the upper strand (15) of the third pair of strands (82), and the upper strand (19) of the second pair of strands (81) is transposed to the lower strand (16) of the third pair of strands (82).

2. The Roebel bar (60-64, 70, 71) according to claim 1, **characterised in that** transposition according to c) is performed for several times two times consecutively.

3. The Roebel bar (60-64, 70, 71) according to claim 1, **characterised in that** transpositions according to b) is performed for several times three times consecutively.

4. The Roebel bar (60-64, 70, 71) according to claim 1, **characterised in that** hollow strands (17, 18, 19) and massive strands (1-16, 20-56) are comprised.

5. A two layer winding (80) of Roebel bars (70, 71) for a slot (75) of an electric machine, **characterised in** two Roebel bars (70, 71) according to claim 1 in the slot (75).

## Patentansprüche

1. Roebelstab (60-64, 70, 71) zur Verwendung in einer elektrischen Maschine, umfassend einen Statorkern mit Nuten (75) zum Einführen des Roebelstabs (60-64, 70, 71), wobei der Roebelstab (60-64, 70, 71) drei Paare (80, 81, 82) von voneinander isolierten Strängen (1-56) aufweist, wohingegen die Stränge (1-56) miteinander derart transponiert sind, dass mindestens einer der Stränge (1-56) der Paare (80, 81, 82) von Strängen (1-56) miteinander transponiert sind, und derart, dass mindestens eines der Paare (80, 81, 82) von Strängen (1-56) mit einem anderen Paar (80, 81, 82) von Strängen (1-56) transponiert ist, wohingegen in einem Nutenteil des Roebelstabs (60-64, 70, 71) die drei Paare (80, 81, 82) von Strängen (1-56) eine kombinierte Transposition von 540° aufweisen und in einem Magnetjochteil des Roebelstabs (60-64, 70, 71) außerhalb der Nuten (75) der Stränge (1-56) keine Transposition aufweisen, **dadurch gekennzeichnet, dass**
a) nacheinander ein oberer Strang (1) des ersten Paars von Strängen (80) auf den unteren Strang (6) des dritten Paars von Strängen (82) transponiert wird, der obere Strang (3) des zweiten Paars von Strängen (81) auf den unteren Strang (4) des zweiten Paars von Strängen (81) transponiert wird und der untere Strang (2) des ersten Paars von Strängen (80) auf den oberen Strang (5) des dritten Paars von Strängen (82) transponiert wird, oder
b) nacheinander der obere Strang (44) des ersten Paars von Strängen (80) auf den unteren Strang (45) des ersten Paars von Strängen (80) transponiert wird, der obere Strang (46) des zweiten Paars von Strängen (81) auf den unteren Strang (47) des zweiten Paars von Strängen (81) transponiert wird und der obere Strang (48) des dritten Paars von Strängen (82) auf den unteren Strang (49) des dritten Paars von Strängen (82) transponiert wird und der obere Strang (53) des ersten Paars von Strängen (80) auf den unteren Strang (49) des dritten Paars von Strängen (82) transponiert wird, der obere Strang (55) des zweiten Paars von Strängen (81) auf den unteren Strang (47) des zweiten Paars von Strängen (81) transponiert wird und der obere Strang (56) des dritten Paars von Strängen (82) auf den unteren Strang (45) des ersten Paars von Strängen (80) transponiert wird, oder
c) nacheinander
- ein oberer Strang (11) des ersten Paars von Strängen (80) auf den unteren Strang (16) des dritten Paars von Strängen (82) transponiert wird, der obere Strang (13) des zweiten Paars von Strängen (81) auf den unteren Strang (14) des zweiten Paars von Strängen (81) transponiert wird und der untere Strang (12) des ersten Paars von Strängen (80) auf den oberen Strang (15) des dritten Paars von Strängen (82) transponiert wird
und anschließend
- der obere Strang (17) des ersten Paars von Strängen (80) auf den unteren Strang (14) des zweiten Paars von Strängen (81) transponiert wird, der untere Strang (18) des ersten Paars von Strängen (80) auf den oberen Strang (15) des dritten Paars von Strängen (82) transponiert wird und der obere Strang (19) des zweiten Paars von Strängen (81) auf den unteren Strang (16) des dritten Paars von Strängen (82) transponiert wird.

2. Roebelstab (60-64, 70, 71) nach Anspruch 1, **dadurch gekennzeichnet, dass** Transposition nach c) mehrmals zweimal nacheinander durchgeführt wird.

3. Roebelstab (60-64, 70, 71) nach Anspruch 1, **dadurch gekennzeichnet, dass** Transpositionen nach b) mehrmals dreimal nacheinander durchgeführt werden.

4. Roebelstab (60-64, 70, 71) nach Anspruch 1, **dadurch gekennzeichnet, dass** hohle Stränge (17, 18, 19) und massive Stränge (1-16, 20-56) umfasst sind.

5. Zweischichtwicklung (80) von Roebelstäben (70, 71) für eine Nut (75) einer elektrischen Maschine, **gekennzeichnet durch** zwei Roebelstäbe (70, 71) nach Anspruch 1 in der Nut (75).

## Revendications

1. Barre Roebel (60-64, 70, 71) destinée à être utilisée dans une machine électrique comprenant un noyau de stator avec des encoches (75) pour insérer la barre Roebel (60-64, 70, 71), la barre Roebel (60-64, 70, 71) possède trois paires (80, 81, 82) de brins (1-56) isolés les unes des autres, alors que les brins (1-56) sont transposés les uns avec les autres de sorte qu'au moins un des brins (1-56) des paires (80, 81, 82) de brins (1-56) sont transposés avec d'autres et de sorte qu'au moins une des paires (80, 81, 82) de brins (1-56) est transposée avec une autre paire (80, 81, 82) de brins (1-56), alors que dans une partie encoche de la barre Roebel (60-64, 70, 71) les trois paires (80, 81, 82) de brins (1-56) présentent une transposition combinée de 540° et dans une partie culasse de la barre Roebel (60-64, 70, 71) à l'extérieur des encoches (75) les brins (1-56) ne présentent aucune transposition, **caractérisée en ce que**
a) de manière consécutive, un brin supérieur (1) de la première paire de brins (80) est transposé au brin inférieur (6) de la troisième paire de brins (82), le brin supérieur (3) de la deuxième paire de brins (81) est transposé au brin inférieur (4) de la deuxième paire de brins (81), et le brin inférieur (2) de la première paire de brins (80) est transposé au brin supérieur (5) de la troisième paire de brins (82), ou
b) de manière consécutive, le brin supérieur (44) de la première paire de brins (80) est transposé au brin inférieur (45) de la première paire de brins (80), le brin supérieur (46) de la deuxième paire de brins (81) est transposé au brin inférieur (47) de la deuxième paire de brins (81), et le brin supérieur (48) de la troisième paire de brins (82) est transposé au brin inférieur (49) de la troisième paire de brins (82) et le brin supérieur (53) de la première paire de brins (80) est transposé au brin inférieur (49) de la troisième paire de brins (82), le brin supérieur (55) de la deuxième paire de brins (81) est transposé au brin inférieur (47) de la deuxième paire de brins (81), et le brin supérieur (56) de la troisième paire de brins (82) est transposé au brin inférieur (45) de la première paire de brins (80), ou
c) de manière consécutive, un brin supérieur (11) de la première paire de brins (80) est transposé au brin inférieur (16) de la troisième paire de brins (82), le brin supérieur (13) de la deuxième paire de brins (81) est transposé au brin inférieur (14) de la deuxième paire de brins (81), et le brin inférieur (12) de la première paire de brins (80) est transposé au brin supérieur (15) de la troisième paire de brins (82) et ensuite
- le brin supérieur (17) de la première paire de brins (80) est transposé au brin inférieur (14) de la deuxième paire de brins (81), le brin inférieur (18) de la première paire de brins (80) est transposé au brin supérieur (15) de la troisième paire de brins (82), et le brin supérieur (19) de la deuxième paire de brins (81) est transposé au brin inférieur (16) de la troisième paire de brins (82).

2. Barre Roebel (60-64, 70, 71) selon la revendication 1, **caractérisée en ce que** la transposition selon c) est effectuée plusieurs fois, deux fois de suite.

3. Barre Roebel (60-64, 70, 71) selon la revendication 1, **caractérisée en ce que** les transpositions selon b) sont effectuées plusieurs fois, trois fois de suite.

4. Barre Roebel (60-64, 70, 71) selon la revendication 1, **caractérisée en ce que** des brins creux (17, 18, 19) et des brins massifs (1-16, 20-56) sont compris.

5. Enroulement à deux couches (80) de barres Roebel (70, 71) pour une encoche (75) d'une machine électrique, **caractérisé par** deux barres Roebel (70, 71) selon la revendication 1 dans l'encoche (75).
